# DEMANDE DE BREVET EUROPEEN

(11) **EP 1 267 367 A1**
(43) Date de publication de la demande: **18.12.2002**
(21) Numéro de dépôt: 02291398.2
(22) Date de dépôt: 06.06.2002
(51) Int. Cl.: H01F 27/02

(54) **Bac de sécurité pour la rétention de fluides diélectriques dans un poste de transformation et de distribution moyenne tension, et poste comportant un tel bac**

(30) Priorité: 14.06.2001 FR 0107787
(71) Demandeur: Alstom, 75116 Paris (FR)
(72) Inventeur: Cormenier, Thierry, 34430 Saint Jean de Vedas (FR); Jarrousse, Robert, 34070 Montpellier (FR)
(74) Mandataire: Gosse, Michel

(57) **Abrégé**

Le bac de sécurité (5, 15, 25) est destiné à un poste de transformation et de distribution moyenne tension comportant un transformateur (1) associé à un appareil de coupure (2), ledit transformateur étant immergé dans un liquide diélectrique contenu dans une cuve (1A), ledit appareil de coupure renfermant un gaz diélectrique et possédant à sa base un dispositif d'évacuation (4) dudit gaz en cas de surpression causée par un défaut électrique interne. Le bac assure une première fonction de sécurité consistant en la rétention dudit liquide en cas de fuite de ladite cuve, et est caractérisé en ce qu'il assure une seconde fonction de sécurité en étant dimensionné de façon à pouvoir canaliser et détendre dans son volume les gaz chauds en surpression provenant de l'appareil de coupure (2) en cas de défaut électrique interne.

## Description

L'invention porte sur un bac de sécurité pour un poste de transformation et de distribution moyenne tension qui comporte un transformateur associé à un appareil de coupure. L'isolation électrique dans ce type de poste fait généralement appel à des fluides diélectriques: les bobinages du transformateur sont immergés dans un liquide diélectrique contenu dans une cuve, et l'appareil de coupure renferme un gaz diélectrique. Pour répondre aux normes en matière de protection de l'environnement, le poste doit comporter une cuve d'étanchéité installée au dessous de la cuve du transformateur. Cette cuve d'étanchéité est généralement disposée dans l'enceinte du poste, par exemple dans le cas de postes à cabine cellulaire posée au sol ou de postes à module monobloc enterré ou semi-enterré. Le volume de la cuve d'étanchéité est prévu pour retenir le liquide diélectrique et éviter ainsi la pollution du sol en cas de fuite. On peut dire qu'il assure une fonction de sécurité vis à vis de l'environnement.

Par ailleurs, un dispositif d'évacuation du gaz diélectrique est généralement prévu à la base de l'appareil de coupure en cas de surpression causée par un défaut électrique interne. Les gaz chauds peuvent ainsi être évacués dans un volume de détente et de refroidissement, constitué par exemple d'un caisson, et prévu pour éviter que des personnes se trouvant au voisinage du poste soient exposés à ces gaz chauds. Ce volume peut posséder des ouvertures permettant de laisser passer les gaz détendus soit vers un autre volume de détente, soit directement à l'extérieur du poste en orientant ces gaz vers des zones d'échappement ne présentant pas de danger d'exposition pour le personnel exploitant ou le public. Le ou les volumes de détente et de refroidissement assurent ainsi une fonction de sécurité vis à vis du personnel. De même qu'une cuve d'étanchéité pour liquide diélectrique, le volume de détente pour les gaz diélectriques est généralement compris dans l'enceinte du poste.

Les postes classiques permettant de retenir le liquide diélectrique du transformateur en cas de fuite possèdent donc à la fois une cuve de rétention pour ce liquide et un caisson de détente pour les gaz de l'appareil de coupure en cas de défaut interne. Chacune des deux fonctions de sécurité énoncées ci-dessus est ainsi assurée par un volume qui lui est dédié, ce qui implique un volume du poste relativement important. L'augmentation des dimensions et donc du poids d'un poste qu'implique l'adoption d'une cuve d'étanchéité répondant aux normes environnementales est particulièrement contraignante, surtout si le poste est destiné à pouvoir être déplacé.

L'invention permet de limiter les contraintes de dimensionnement qu'impliquent ces normes, en proposant un poste de transformation et de distribution moyenne tension qui intègre un bac de sécurité permettant à la fois de retenir le liquide diélectrique du transformateur et de servir de caisson de détente et de refroidissement pour le gaz diélectrique de l'appareil de coupure. Les postes pouvant être réalisés selon l'invention sont ainsi relativement compacts et peuvent être plus facilement déplacés.

L'invention a donc pour objet un bac de sécurité tel qu'introduit précédemment, assurant une première fonction de sécurité consistant en la rétention du liquide diélectrique, caractérisé en ce qu'il assure une seconde fonction de sécurité en étant dimensionné de façon à pouvoir canaliser et détendre dans son volume les gaz chauds en surpression provenant de l'appareil de coupure en cas de défaut électrique interne.
Dans un mode particulier de réalisation du bac de sécurité selon l'invention, un appareil refroidisseur pouvant être traversé par les gaz chauds est intégré à une plaque qui sépare en deux parties le volume du bac. L'ensemble formé par la plaque et l'appareil est prévu perméable au liquide diélectrique. Cette perméabilité peut être obtenue par l'appareil seul, ou aussi par des orifices pratiqués dans la plaque.

L'invention a aussi pour objet un poste de transformation et de distribution moyenne tension comportant un bac de sécurité tel que revendiqué.
Selon des modes particuliers de réalisation, le poste selon l'invention peut comprendre l'une ou plusieurs des caractéristiques suivantes prises isolément ou selon toutes les combinaisons techniquement possibles:
- la structure du bac est agencée pour pouvoir supporter les éléments du poste et est munie de roulettes ou de moyens de déplacement équivalents permettant la mobilité du poste,
- l'appareil de coupure possède une paroi verticale qui est adjacente au transformateur, et la plaque intégrant l'appareil refroidisseur dans le bac est disposée dans le prolongement de cette paroi, cette plaque de séparation du volume du bac pouvant constituer avantageusement un élément de maintient pour l'appareil de coupure,
- des éléments déflecteurs protègent des ouvertures de ventilation ménagées dans les parois latérales du bac pour permettre qu'une partie des gaz chauds détendus dans le volume du bac soit évacuée hors du poste en remontant verticalement le long de ce dernier,
- un volume de détente est disposé au dessus du bac et communique avec le volume de rétention du bac par des orifices prévus pour autoriser la remontée et la détente des gaz chauds, lesdits orifices étant munis d'une soupape d'échappement destinée à l'amortissement rapide de l'onde de pression dans le bac.

L'invention, ses caractéristiques et ses avantages sont précisés dans la description qui suit en rapport avec les figures ci dessous.
La figure 1 représente un poste de transformation et de distribution moyenne tension à cabine cellulaire posée au sol, dont la partie inférieure forme un bac de sécurité selon l'invention.
La figure 2 représente un poste de transformation et de distribution moyenne tension à module monobloc semi-enterré, dont la partie destinée à être enterrée forme un bac de sécurité selon l'invention.
La figure 3 représente un poste mobile de transformation et de distribution moyenne tension, dont les éléments sont supportés par la structure d'un bac de sécurité selon l'invention.

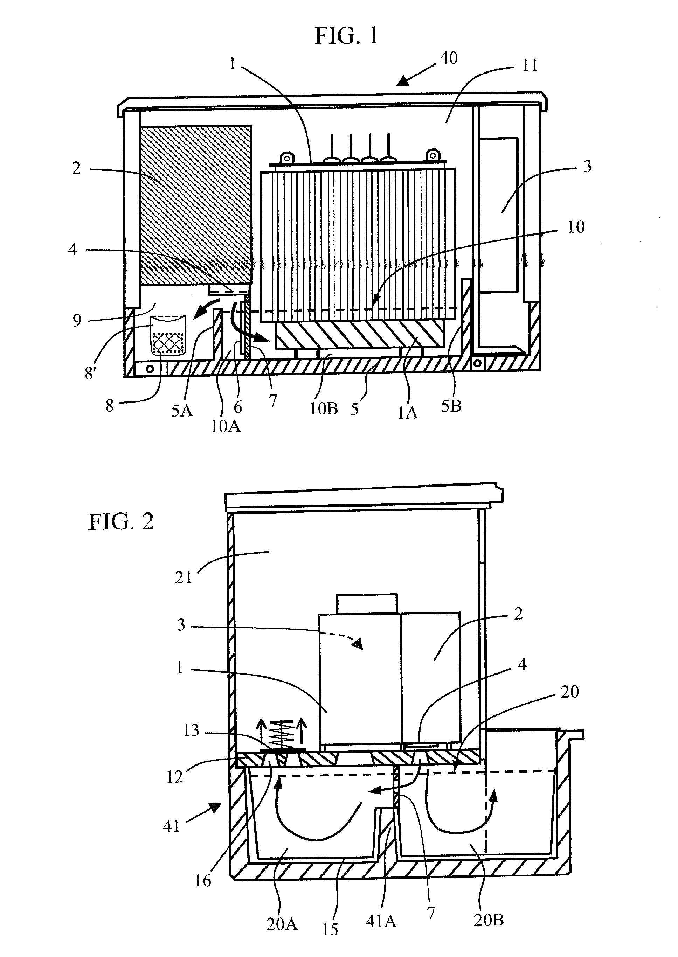

Figure 1, le poste de transformation et de distribution moyenne tension est contenu dans une cabine cellulaire 40 posée au sol. Le poste comprend un transformateur moyenne tension 1, un appareil de coupure moyenne tension 2, et un tableau de distribution basse tension 3.

L'appareil de coupure 2 comprend à sa base une ouverture de sécurité 4 prévue pour s'ouvrir en cas de surpression du gaz diélectrique dans l'enceinte de l'appareil, et donc en cas d'arc électrique interne à l'appareil, pour laisser s'échapper les gaz chauds vers la partie inférieure 5 de la cabine. Il permet de couper un courant excessif entre le réseau moyenne tension et le transformateur. La cuve du transformateur contenant le liquide diélectrique comporte une partie basse lA. Le transformateur est monté dans la cabine 40 de façon à ce qu'il reste un espace entre le fond de sa cuve et la partie inférieure 5 de la cabine.

Cette partie inférieure 5 comprend des parois verticales SA et 5B de façon à former un récipient étanche dont le volume de rétention 10 est suffisant pour contenir le liquide diélectrique du transformateur en cas de fuite. Par exemple, ce volume 10 peut être approximativement égal au volume du liquide diélectrique majoré de 5%. La paroi verticale SA est disposée sous l'ouverture de sécurité 4 de l'appareil de coupure 2, de façon à ce que le flux des gaz chauds soit séparé en deux parties. La majeure partie du flux est dirigée vers le volume de rétention 10, les flux séparés étant représentés par des flèches sur la figure. La partie restante du flux est dirigée vers un volume mort 9. Un autre volume mort 11 autour du transformateur peut communiquer avec le volume de rétention 10 pour aider à la détente des gaz en surpression arrivant dans ce volume 10.

Des ouvertures de ventilation 8 de la cabine 40 peuvent être ménagées dans la paroi de la partie inférieure 5 pour faire communiquer les volumes 9 ou 10 avec l'extérieur. Une ventilation 8 servant à refroidir le transformateur est masquée à la vue par un déflecteur 8' qui est fixé sur ladite paroi et permet d'empêcher une entrée d'eau dans la cabine si l'aire sur laquelle repose cette cabine vient à être exposée à des projections d'eau provenant de l'extérieur. Ces ouvertures de ventilation laissent généralement sortir une partie des gaz chauds vers l'extérieur de la cabine en cas de défaut interne à l'appareil de coupure. Avantageusement, le déflecteur 8' a une forme étudiée pour permettre aux gaz chauds expulsés de remonter verticalement le long de la cabine sans atteindre le personnel situé à proximité du poste.

La partie inférieure 5 de la cabine constitue un bac de sécurité selon l'invention, en ce sens que le volume de rétention 10 permet la détente des gaz chauds de l'appareil de coupure.
Dans la réalisation représentée, le volume de rétention 10 est séparé en deux parties 10A et 10B par une plaque 7 qui intègre un appareil refroidisseur 6. Ce dernier peut être traversé par les gaz chauds et permet de diminuer leur température tout en transformant le flux laminaire d'entrée de ces gaz en un flux turbulent de sortie se dispersant dans le volume 10. L'ensemble formé par la plaque 7 et l'appareil 6 est prévu perméable au liquide diélectrique, en ce sens qu'il laisse passer le liquide de la partie 10B vers la partie 10A pour que tout le volume 10 soit utilisé pour la rétention du liquide. Cette perméabilité peut être intrinsèque à l'appareil refroidisseur 6, ou obtenue par des orifices pratiqués dans la plaque 7. Avantageusement, cette plaque 7 est disposée approximativement dans le prolongement de la paroi verticale de l'appareil de coupure qui est adjacente au transformateur. Elle constitue alors un élément de maintient pour l'appareil de coupure.

La présence d'un appareil refroidisseur n'est pas toujours indispensable. Elle dépend notamment du niveau d'énergie à dissiper pour l'appareil de coupure 2 et des volumes 9, 10, et 11 prévus pour la détente des gaz chauds. L'installation d'un appareil refroidisseur 6 dans le volume 10 permet de diminuer suffisamment la température des gaz chauds pour ne pas détériorer la partie inférieure 5 de la cabine si l'énergie à dissiper est importante.

Figure 2, le poste de transformation et de distribution moyenne tension est contenu dans un module monobloc 41 semi-enterré, par exemple réalisé en béton. Le module comporte une dalle 12 pouvant supporter le poids du poste, dans laquelle sont ménagées des ouvertures permettant aux diélectriques liquides ou gazeux de passer dans le volume 20 situé sous la dalle. Le transformateur 1, l'appareil de coupure 2 et le tableau basse tension 3 sont analogues aux éléments représentés à la figure 1.

Le volume 20 sous la dalle 12 est délimité par la partie basse du module 41 qui est rendue étanche par une paroi 15 de façon à former un bac de rétention pour le liquide diélectrique du transformateur. Le fond du module 41 comporte une paroi verticale 41A qui forme une séparation du volume 20 en deux parties 20A et 20B, sans toutefois remonter jusqu'à la dalle 12 pour laisser un passage entre les volumes 20A et 20B. Le volume 20B est situé sous l'ouverture de sécurité 4 de l'appareil de coupure 2 et accueille donc les gaz chauds en surpression en cas de défaut électrique interne à cet appareil. Le passage entre les volumes 20B et 20A peut être complètement libre, ou encore occupé par une plaque 7 largement percée comme représenté sur la figure, cette plaque pouvant en option intégrer un appareil refroidisseur de même que dans le poste représenté à la figure 1. La solution choisie dépend en grande partie de l'énergie des gaz chauds à dissiper, et donc de l'intensité du courant qui doit traverser l'appareil de coupure.

Afin d'obtenir une détente suffisante pour les gaz chauds, la dalle 12 comporte des orifices 16 pour faire communiquer le volume de rétention 20 avec le volume mort 21 constitué par l'espace non utilisé dans le module au dessus de la dalle et pour autoriser la remontée et la détente des gaz chauds dans ce volume mort. Ces orifices 16 peuvent être dégagés de façon à laisser passer en permanence le flux des gaz en surpression. Toutefois, la demanderesse a testé un système d'échappement par une soupape 13 réalisée à partir d'une tôle montée sur un ressort, cette tôle étant plaquée sur la dalle 12 en temps normal pour obstruer les orifices 16. Elle a pu vérifier que l'onde de pression se trouve fortement amortie par rapport à un fonctionnement avec les orifices 16 dégagés, permettant de dissiper d'autant plus vite l'énergie des gaz chauds. Une telle soupape 13 constitue ainsi une solution économique, qui est intermédiaire en terme de coût et d'efficacité entre une solution à orifices dégagés et une solution utilisant un appareil refroidisseur. Là encore, la solution choisie dépend en grande partie de l'énergie des gaz chauds à dissiper.

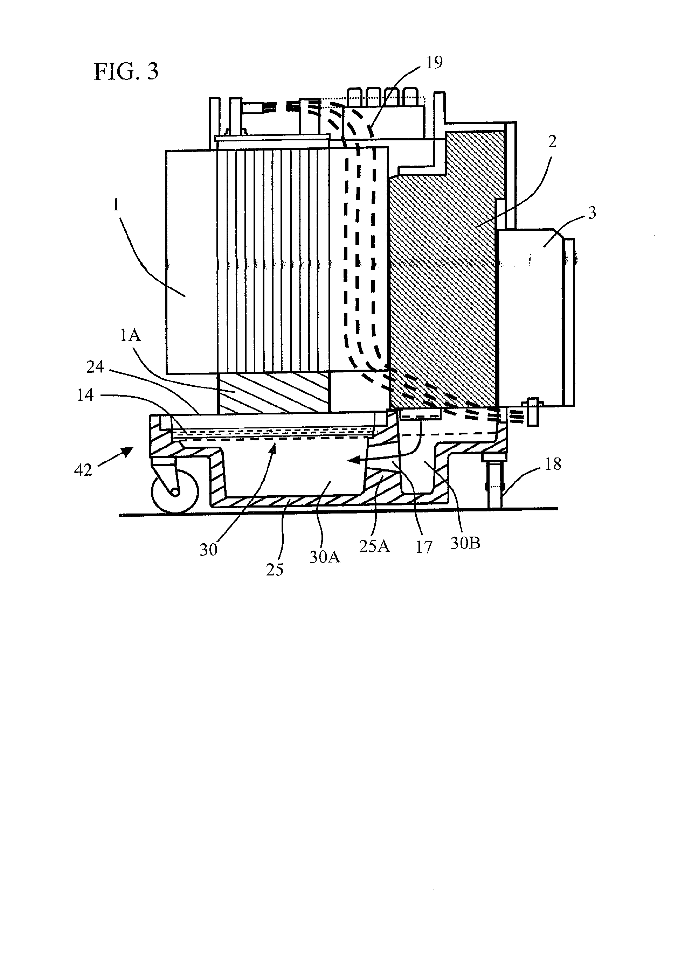

Figure 3, le poste de transformation et de distribution moyenne tension n'est pas protégé des intempéries et est destiné à une installation en intérieur, par exemple en immeuble ou dans des locaux techniques et bâtiments préfabriqués. Le transformateur 1, l'appareil de coupure 2 et le tableau basse tension 3 sont supportés par un bac de sécurité 25 selon l'invention qui forme un châssis mobile 42. Ainsi, la structure du bac est agencée pour pouvoir supporter les trois éléments du poste et est munie de roulettes 18 pour permettre la mobilité de l'ensemble. Ce poste selon l'invention constitue un ensemble complet mobile prêt au raccordement électrique et assurant à lui seul les fonctions de sécurité décrites précédemment.

Le bac 25 comporte une paroi ou plaque de séparation 25 A située approximativement dans le prolongement de la paroi verticale de l'appareil de coupure qui est adjacente au transformateur, afin de supporter une partie du poids de l'appareil de coupure. Cette paroi 25A sépare le volume 30 du bac en deux parties 30A et 30B qui communiquent entre elles par un passage 17 pratiqué dans la paroi. Le volume 30B est situé sous l'appareil de coupure 2. La partie du bac 25 qui délimite le volume 30A sert de support à deux rails horizontaux 24 supportant le transformateur 1. Ainsi, une partie du poids du transformateur est supportée par la plaque de séparation 25A dont l'épaisseur est dimensionnée en conséquence.

Le tableau basse tension 3 est accolé à l'appareil de coupure 2, et son poids est principalement supporté par une paroi latérale du bac 25. Des câbles d'arrivée basse tension 19 relient le transformateur au tableau. Dans une réalisation non représentée, ce tableau 3 peut tourner de 90° autour de l'appareil de coupure afin de pouvoir s'adapter à plusieurs configurations d'orientation des câbles de sortie basse tension.

Un caillebotis 14 est disposé au dessus du volume 30A sous les deux rails 24. Ce caillebotis est par exemple constitué de plaques de béton perforé assemblées en trames décalées, de façon à créer une multitude de chicanes pour l'écoulement du liquide diélectrique du transformateur dans le bac de rétention 25. Il doit permettre l'extinction du liquide en cas d'inflammation dans le bac, en limitant fortement l'arrivée d'air pouvant entretenir les flammes. Par ailleurs, en cas d'échappement de gaz chauds de l'appareil de coupure, ceux-ci sont lentement évacués hors du bac à travers le caillebotis, sans danger pour le personnel qui pourrait se trouver à proximité du poste.

Le bac 25 est en béton voire métallique, afin de résister autant que possible aux hautes températures des gaz chauds en cas de défaut électrique dans l'appareil de coupure. Le passage 17 pratiqué dans la paroi 25A peut éventuellement loger un appareil refroidisseur si l'énergie à dissiper est trop importante.

En cas d'avarie, le châssis mobile 42 formé par le bac de sécurité 25 peut être rapidement remplacé.

## Revendications

1. Bac de sécurité (5, 15, 25) pour un poste de transformation et de distribution moyenne tension comportant un transformateur (1) associé à un appareil de coupure (2), ledit transformateur étant immergé dans un liquide diélectrique contenu dans une cuve (1A), ledit appareil de coupure renfermant un gaz diélectrique et possédant à sa base un dispositif d'évacuation (4) dudit gaz en cas de surpression causée par un défaut électrique interne, ledit bac assurant une première fonction de sécurité consistant en la rétention dudit liquide en cas de fuite de ladite cuve, **caractérisé en ce qu'**il assure une seconde fonction de sécurité en étant dimensionné de façon à pouvoir canaliser et détendre dans son volume les gaz chauds en surpression provenant de l'appareil de coupure (2) en cas de défaut électrique interne.

2. Bac de sécurité selon la revendication 1, dans lequel un appareil refroidisseur (6) pouvant être traversé par lesdits gaz chauds est intégré à une plaque (7) qui sépare en deux parties le volume du bac, l'ensemble formé par la plaque et l'appareil étant perméable audit liquide diélectrique.

3. Bac de sécurité selon l'une des revendications 1 et 2, dans lequel le volume total (10, 20, 30) pouvant retenir le liquide est approximativement égal au volume de liquide diélectrique contenu dans ledit transformateur (1) majoré de 5%.

4. Poste de transformation et de distribution moyenne tension, **caractérisé en ce qu'**il comporte un bac de sécurité selon l'une des revendications 1 à 3.

5. Poste selon la revendication 4, dans lequel la structure (42) du bac est agencée pour pouvoir supporter les éléments du poste et est munie de roulettes (18) ou de moyens de déplacement équivalents permettant la mobilité du poste.

6. Poste selon l'une des revendications 4 et 5, dans lequel l'appareil de coupure (2) possède une paroi verticale qui est adjacente au transformateur (1) dans le prolongement de laquelle est disposée ladite plaque (7).

7. Poste selon la revendication 6, dans lequel ladite plaque (7) constitue un élément de la structure qui maintient ledit appareil de coupure (2).

8. Poste selon l'une des revendications 4 à 7, dans lequel des éléments déflecteurs (8') protègent des ouvertures de ventilation (8) ménagées dans les parois latérales du bac pour permettre qu'une partie des gaz chauds détendus dans le volume du bac soit évacuée hors du poste en remontant verticalement le long de ce dernier,

9. Poste selon l'une des revendications 4 à 7, dans lequel un volume de détente (21) est disposé au dessus du bac et communique avec le volume (20) de rétention du bac par des orifices (16) prévus pour autoriser la remontée et la détente des gaz chauds, et dans lequel lesdits orifices (16) sont munis d'une soupape d'échappement (13) destinée à l'amortissement rapide de l'onde de pression dans le bac.
